# EUROPEAN PATENT SPECIFICATION

(11) **EP 2 909 382 B1**
(45) Date of publication and mention of the grant of the patent: **06.03.2019**
(21) Application number: 13801751.2
(22) Date of filing: 18.09.2013
(51) Int. Cl.: E03B 3/16, F04B 47/06, E03B 3/12, E03B 5/06, E03B 5/04

(54) **DRINKABLE WATER WELL STRUCTURE AND METHOD FOR MAKING DRINKABLE WATER WELLS**
TRINKWASSERBRUNNENSTRUKTUR UND VERFAHREN ZUR HERSTELLUNG VON TRINKWASSERBRUNNEN
STRUCTURE DE PUITS D'EAU POTABLE ET PROCÉDÉ POUR RÉALISER DES PUITS D'EAU POTABLE

(30) Priority: 18.09.2012 IT MI20121544
(43) Date of publication of application: 26.08.2015
(73) Proprietor: DRINK CUP s.r.l. con unico socio, 10036 Settimo Torinese (IT)
(72) Inventor: FERRERO, Marco Antonio, I-10036 Settimo Torinese (IT)
(74) Representative: Cernuzzi, Daniele
(86) International application number: PCT/IB2013/058642
(87) International publication number: WO 2014/045211

(56) References cited:
- DE-U1-202005 005 868
- US-A- 2 918 972

## Description

### TECHNICAL FIELD

The present invention relates to a drinkable water well structure and to a method for making drinkable water wells according, respectively, to the preamble of independent claims 1 and 4 (the general definition of drinkable water including any water intended for human consumption and thus also, among the others, spring water and mineral water.

### BACKGROUND ART

A drinkable water well normally consists of a vertical excavation in which a containment and water drawing structure is inserted; the structure commonly comprises a containment tube, which is inserted into the excavation during drilling and constitutes the lateral wall of the well, and a submersible pump, located on the bottom of the containment tube and that remains in use immersed in the water and is connected to a delivery tube, housed inside the containment tube and through which the water is drawn and brought to the surface.

With this type of structure, between the delivery tube of the pump and the wall of the containment tube there is a hollow space, in which the water level rises and lowers and in which algae, bacteria and other organisms proliferate, forming a biofilm on the walls of the tubes; this implies obvious hygiene problems and the need to sanitize the well at periodic intervals.

Moreover, the implementation of these structures poses some constructive problems, requiring the well to be dug and then the submersed pump to be placed with the relative delivery tube at the correct depth.

Document US2918972 discloses a well structure in which the delivery tube of the pump is housed inside a structural containment tube.

DE202005005868U1 discloses a well structure in which the same tube defines both the lateral wall of the well (performing a structural function) and the delivery conduit of the pump (channelling the water drawn by the pump) . The pump is lowered in the well by an operating device which is then detached from the pump.

### DISCLOSURE OF INVENTION

An object of the present invention is to provide a drinkable water well structure and a method for making drinkable water wells which are free from the drawbacks of the prior art mentioned above; in particular, an object of the invention is to provide a structure and a making method which, while being particularly simple, allow the frequency of sanitizing operations to be reduced.

The present invention therefore relates to a drinkable water well structure and to a method for making drinkable water wells as defined in essential terms in the appended claims 1 and 4, respectively, as well as, for the preferred additional characters, in the dependent claims.

The structure of the invention allows the problems related to the proliferation of bacteria, algae, etc., in the hollow space between the containment tube and the delivery conduit of the pump to be eliminated, since the containment tube also acts as a delivery conduit; in this way, the need of conducting sanitizing operations of the well is greatly reduced; in addition, the structure is particularly simple to be made and installed, and the method of the invention is as a whole simple and fast to be implemented.

The invention finds application both in new well constructions, which are dug and provided with the structure of the invention, and in the conversion of existing wells, in which the structure according to the invention is installed on the existing excavation, also using the containment tube already installed.

### BRIEF DESCRIPTION OF THE DRAWINGS

Further features and advantages of the present invention will appear clearly from the following description of a non-limiting embodiment example thereof, made with reference to the figures in the accompanying drawings, in which:
- figure 1 is a partially sectional diagrammatic view of a drinkable water well structure according to a first embodiment of the invention;
- figure 2 is a view in enlarged scale and with parts removed for clarity, of a detail of the structure in figure 1;
- figure 3 is a partially sectional diagrammatic view of a drinkable water well structure according to a second embodiment of the invention;
- figure 4 is a view in enlarged scale and with parts removed for clarity, of a detail of the structure in figure 3.

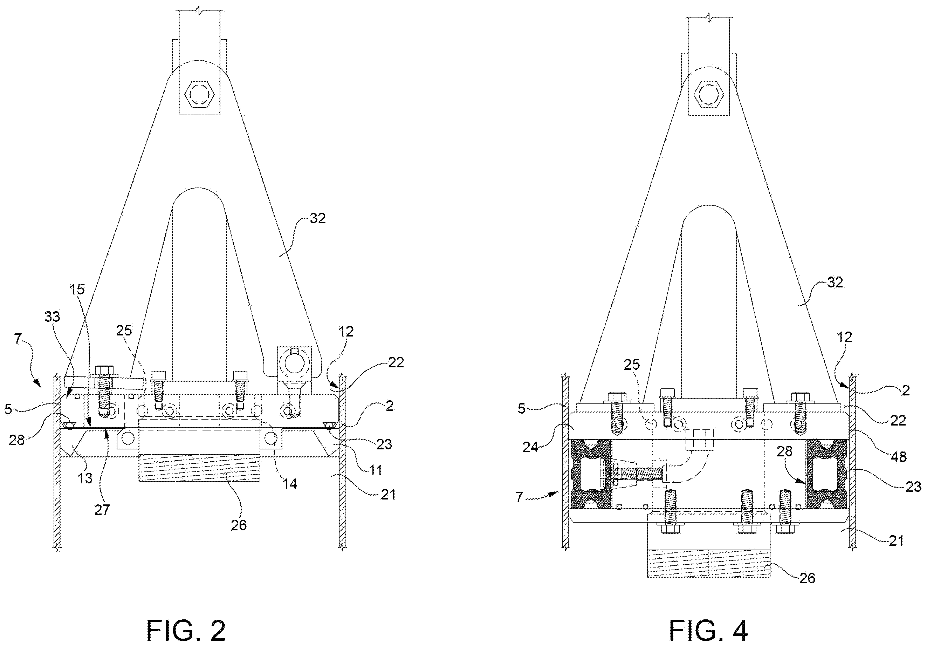

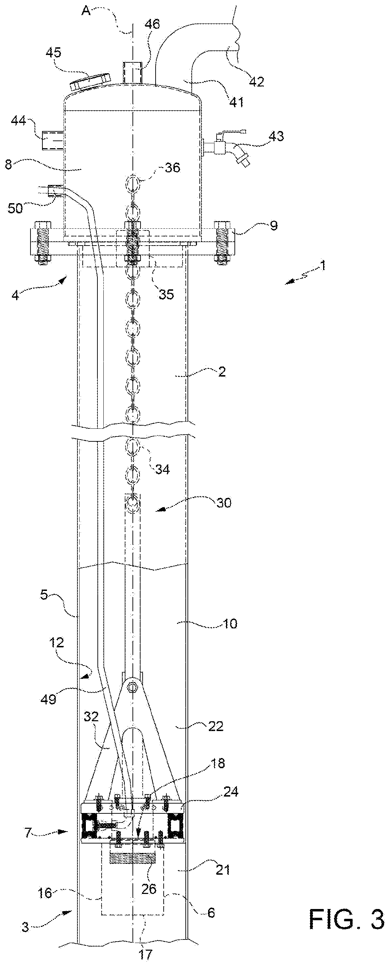

The embodiment relative to the figures 3 and 4 is not comprised in the scope of the protection of the claims.

### BEST MODE FOR CARRYING OUT THE INVENTION

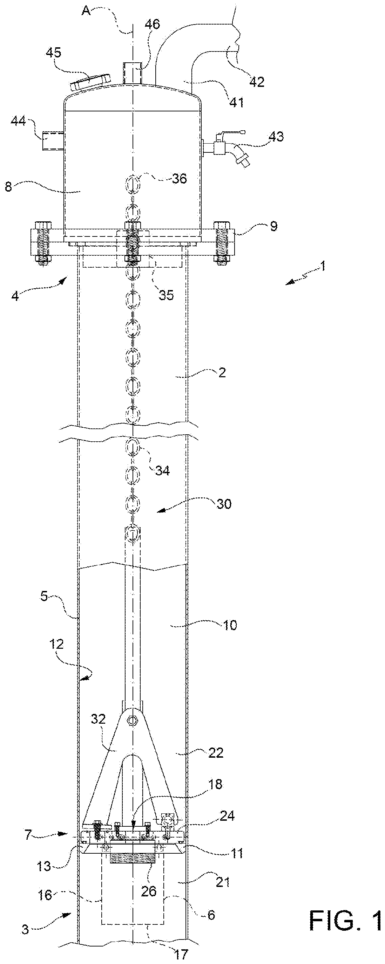

In figure 1, reference numeral 1 indicates as a whole a drinkable water well structure.

Structure 1 mainly comprises: a structural tube 2, extending along an axis A between a lower end 3 and an upper end 4 and having a lateral wall 5, for example substantially cylindrical; a submersible pump 6, positioned at the lower end 3 of tube 2; a support device 7 to mechanically and in a fluid-tight manner connect pump 6 to the lateral wall 5 of tube 2; an upper casing 8, positioned at the upper end 4 of tube 2 and fixed to tube 2 via, for example, a flanged coupling 9.

Tube 2 is inserted, in use, in a vertical excavation or well (not shown), of which it defines a lateral wall, to a depth sufficient to reach an aquifer or source from which water is drawn.

Tube 2 performs both a structural function, forming the lateral wall of the well, and a function of channelling the water drawn by pump 6, defining a delivery conduit 10 of pump 6.

Tube 2 is possibly formed by a series of pipe sections joined to one another along axis A; at the lower end 3, tube 2 is provided with an inner support element 11, belonging to support device 7 and fixed to an inner lateral surface 12 of tube 2.

With reference also to figure 2, support element 11 is substantially ring-shaped; in particular, support element 11 comprises a radially inner ring 13, which extends from surface 12 of tube 2 and is for example welded to lateral wall 5; ring 13 has a central through opening 14 and has an upper face 15, facing towards upper end 4 of tube 2, substantially flat.

Pump 6 is a submersible pump of per se known type and is only schematically shown in figure 1; pump 6 has a pump body 16 with a suction inlet 17, from which pump 6 draws water, and a delivery outlet 18, through which pump 6 delivers water.

Pump 6 is supported and mechanically connected to tube 2 by support device 7, which divides tube 2 in a lower zone 21 of water drawing, in which pump 6 is housed, and an upper zone 22, in which the water drawn by pump 6 flows and which constitutes delivery conduit 10 of pump 6.

Support device 7 separates in a fluid-tight manner the two zones 21, 22, for example by means of a gasket 23.

Support device 7 comprises support element 11 and a mounting flange 24 on which pump 6 is mounted and which is connected mechanically and in a fluid-tight manner to inner lateral surface 12 of tube 2, so as to support pump 6 in tube 2.

In particular, flange 24 is ring-shaped and has a central opening 25; flange 24 is provided with an attachment 26 to be attached to pump body 16 of pump 6 and rests on support element 11, precisely on upper face 15 of ring 13; gasket 23 is, in the non-limiting example shown in figures 1 and 2, an axial sealing gasket positioned between a lower face 27 of flange 24 and upper face 15 of ring 13. For example, gasket 23 is defined by a sealing ring housed in an annular seat 28 formed on face 27 of flange 24 and/or on face 15 of ring 13.

Pump body 16 of pump 6 is attached to flange 24, for example by means of a threaded coupling, optionally provided with an anti-rotation/unscrewing system.

Pump 6 extends from flange 24 in such a way that inlet 17 is positioned below support element 11, and outlet 18 is positioned above support element 11 or hydraulically communicates, for example through central opening 25 of flange 24 and/or central opening 14 of ring 13, with delivery conduit 10 (i.e. with upper zone 22 of tube 2).

Flange 24 is provided with a housing for cables (not shown) for powering and controlling pump 6, and a lifting system 30.

Lifting system 30 for example comprises a bracket 32 fixed to flange 24 and which extends from an upper face 33 of flange 24, and a suspension element 34, for example a chain or cable or other similar element, coupled to bracket 32; suspension element 34 is coupled, at upper end 4 of tube 2, to a releasable stopping device 35; suspension element 34 has an upper free section 36, projecting from device 35 and intended to be coupled on a hoist to maneuver bracket 32.

Upper end 4 of tube 2 is closed by casing 8, which is fixed to tube 2 through flanged coupling 9, formed by a pair of flanges fixed to tube 2 and casing 8, respectively.

Casing 8 is provided with a fitting 41 connected to an outlet tubing 42 (through which the water drawn from the well is delivered to the user).

Casing 8 is also provided with a drawing tap 43, an outlet 44 for cables, an inspection window 45 and an auxiliary inlet 46 for introducing any treatment agents within tube 2.

According to the method of the invention, a drinkable water well is made as follows.

In known manner, the necessary vertical excavation is made and tube 2 is positioned (if necessary, adding and combining various sections gradually) in the excavation.

Lower end 3 of tube 2 is provided with support element 11, arranged to receive and support flange 24 and pump 6.

Pump 6, fixed to flange 24, is lowered through open upper end 4 of tube 2 through lifting system 30 and suspension element 34, connected to a hoist, until flange 24 rests on support element 11.

Suspension element 34 is then attached to device 35 stop and detached from the hoist.

Finally, casing 8 is fixed through flanged coupling 9.

Figures 3 and 4, in which details similar or identical to those already described are indicated with the same reference numerals, show a variant of structure 1 of the invention, particularly suitable in case an existing well is to be modified; however, this embodiment is not comprised in the scope of the claims.

Structure 1 still comprises structural tube 2, submersible pump 6 positioned at lower end 3 of tube 2, support device 7 and casing 8.

In this case, in order to obviate the difficulty of providing lower end 3 of tube 2 with support element 11 (for example, to use a tube 2 already installed, without support element 11), support device 7 includes an expandable gasket 23, in particular a pneumatic inflatable gasket, mounted on flange 24 which carries pump 6.

In particular, gasket 23 is a radial sealing gasket, radially inserted between mounting flange 24 and inner lateral surface 12 of tube 2; for example, gasket 23 is housed in an annular seat 28, -positioned along a radially outer peripheral edge 48 of mounting flange 24 and facing surface 12.

Gasket 23 is configured to selectively assume a retracted installation configuration, in which gasket 23 is entirely housed in seat 28 and does not project radially outside seat 28; and an expanded sealing configuration, in which gasket 23 projects radially outside seat 28 and beyond edge 48 for contacting inner lateral surface 12 of tube 2.

Gasket 23 is fed by an air tube 49 connected to an inflation device (for example, a compressor), known and not shown; air tube 49 is housed in tube 2 and protrudes from a dedicated hole 50 in casing 8; gasket 23 selectively assumes the retracted installation configuration and the expanded sealing configuration, feeding air to gasket 23 and drawing air from gasket 23.

In the expanded sealing configuration, gasket 23 exerts a pressure on surface 12 sufficient to support flange 24 and pump 6, and thereby to mechanically fix flange 24 and pump 6 to tube 2. To firmly support flange 24 and pump 6 even under the pressure of the water column that is formed in zone 22 (delivery conduit 10), flange 24 and pump 6 are still fixed to lifting system 30 and specifically to suspension element 34 already described (which is in turn fixed, at upper end 4 of tube 2, to releasable stopping device 35).

In this variant, tube 2 can be a tube already installed in an existing well.

The method of the invention therefore does not require the steps of digging and installing tube 2, because it uses the existing pipe.

Pump 6 and flange 24, provided with gasket 23 in the retracted installation configuration, are lowered into existing tube 2, through lifting system 30 and suspension element 34, connected to a hoist.

Once the desired position at lower end 3 of tube 2 has been reached, gasket 23 is inflated, bringing it to the expanded sealing configuration; gasket 23 radially expands adhering to inner lateral surface 12 of tube 2 and thereby fixing in a fluid-tight manner pump 6 to lateral wall 5 of tube 2.

Suspension element 34 is then fixed to stopping device 35, so as to ensure support of flange 24 and pump 6, and detached from the hoist.

Finally, it is understood that further changes and variations may be made to the drinkable water well structure and to the method described and shown herein without departing from the scope of the appended claims.

## Claims

1. A drinkable water well structure (1), comprising a structural tube (2) defining a lateral wall of a well; and a submersible pump (6), positioned at a lower end (3) of the tube (2) and connected to a delivery conduit (10); the structure comprising a support device (7) that supports the pump (6) and connects mechanically and in a fluid-tight manner the pump (6) to an inner lateral surface (12) of the tube (2), in such a way that the tube (2) performs both a structural function, since the tube (2) defines the lateral wall of the well, and a function of channelling the water drawn by the pump (6), since the tube (2) also defines the delivery conduit (10) of the pump (6); the support device (7) comprising a mounting flange (24) on which the pump (6) is mounted and which is connected mechanically and in a fluid-tight manner to the inner lateral surface (12) of the tube (2), so as to support the pump (6) in the tube (2) ; the structure being **characterized by** comprising an upper casing (8), positioned at an upper end (4) of the tube (2) and fixed to the tube (2) via a flanged coupling (9), formed by a pair of flanges fixed to the tube (2) and casing (8), so as to close the upper end (4) of the tube (2) and provided with a fitting (41) connected to an outlet tubing (42) through which the water drawn from the well is delivered to a user; and in that the mounting flange (24) is attached to a suspension element (34), for example a chain or cable or other similar element, which is fixed, at the upper end (4) of the tube (2), to a releasable locking device (35) so as to ensure support of the flange (24) and the pump (6) in use; the support device (7) comprising furthermore a support element (11), substantially ring-shaped and fixed to the inner lateral surface (12) of the tube (2), which support element (11) comprising a radially inner ring (13) which extends from the inner lateral surface (12) of the tube (2) and is welded to a lateral wall (5) of the tube (2) and has a central through opening (14) and an upper face (15), facing towards the upper end (4) of the tube (2), substantially flat; the mounting flange (24) resting on the ring(13); an axial sealing gasket (23) being positioned between a lower face (27) of the mounting flange (24) and the upper face (15) of the ring (13).

2. A structure according to claim 1, wherein the support device (7) is positioned at the lower end (3) of the tube (2) and divides the tube (2) in a lower zone (21) for water suction, in which an inlet (17) of the pump (6) is located, and an upper zone (22), communicating with an outlet (18) of the pump (6) and that constitutes the delivery conduit (10) of the pump (6).

3. A structure according to claim 2, wherein said gasket (23) separates in a fluid-tight manner the two zones (21, 22).

4. A method for making a drinkable water well, comprising the steps of:
- providing a tube (2) defining a lateral wall of a well;
- mounting a submersible pump (6) on a mounting flange (24); attaching the mounting flange (24) to a suspension element (34), for example a chain or cable or other similar element;
- lowering inside the tube (2) the submersible pump (6) mounted on the mounting flange (24);
- mechanically connecting the pump (6) to an inner lateral surface (12) of the tube (2) by means of a support device (7), that comprises the mounting flange (24) and that supports the pump (6) and connects mechanically and in a fluid-tight manner the pump (6) to the inner lateral surface (12) of the tube (2), in such a way that the tube (2) performs both a structural function, since the tube (2) defines the lateral wall of the well, and a function of channelling the water drawn by the pump (6), since the tube (2) also defines the delivery conduit (10) of the pump (6); the mounting flange (24) being connected mechanically and in a fluid-tight manner to the inner lateral surface (12) of the tube (2), so as to support the pump (6) in the tube (2) ;
the method being **characterized by** comprising the steps of:
- fixing an upper casing (8), provided with a fitting (41) connected to an outlet tubing (42) through which the water drawn from the well is delivered to a user, to an upper end (4) of the tube (2) via a flanged coupling (9), formed by a pair of flanges fixed to the tube (2) and casing (8), so as to close the upper end (4) of the tube (2);
- providing a lower end (3) of the tube (2) with a support element (11), substantially ring-shaped and fixed to the inner lateral surface (12) of the tube (2) and arranged to receive and support the mounting flange (24) that carries the pump (6), the support element (11) comprising a radially inner ring (13) which extends from the inner lateral surface (12) of the tube (2) and is welded to a lateral wall (5) of the tube (2) and has a central through opening (14) and an upper face (15), facing towards the upper end (4) of the tube (2), substantially flat;
- leaning the mounting flange (24) on the ring (13); an axial sealing gasket (23) being positioned between a lower face (27) of the mounting flange (24) and the upper face (15) of the ring (13);
- fixing the suspension element (34), at an upper end (4) of the tube (2), to a releasable locking device (35) so as to ensure support of the flange (24) and the pump (6) in use.

5. A method according to claim 4, wherein the support device (7) is positioned at a lower end (3) of the tube (2) so at to divide the tube (2) in a lower zone (21) for water suction, in which an inlet (17) of the pump (6) is located, and an upper zone (22), communicating with an outlet (18) of the pump (6) and that constitutes the delivery conduit (10) of the pump (6).

6. A method according to claim 5, wherein the gasket (23) separates in a fluid-tight manner the two zones (21, 22) .

7. A method according to claim 5 or 6, wherein the tube (2) is a tube already installed in an existing well, and the method comprises the steps of removing from the well the pump present in the well and the associated delivery conduit, and inserting in the tube (2) the pump (6) and the support device (7).

## Patentansprüche

1. Eine Trinkwasserbrunnenstruktur (1), umfassend ein Strukturrohr (2), definierend eine laterale Wand eines Brunnens; und eine Tauchpumpe (6), positioniert an einem unteren Ende (3) des Rohrs (2) und verbunden mit einer Förderleitung (10); die Struktur umfassend eine Stützvorrichtung (7), die die Pumpe (6) stützt und mechanisch und auf eine fluiddichte Art die Pumpe (6) mit einer inneren lateralen Oberfläche (12) des Rohrs (2) verbindet, auf so eine Weise, dass das Rohr (2) sowohl eine strukturelle Funktion ausführt, da das Rohr (2) die laterale Wand des Brunnens definiert, als auch eine Funktion des Kanalisierens des von der Pumpe (6) gepumpten Wassers, da das Rohr (2) auch die Förderleitung (10) der Pumpe (6) definiert; die Stützvorrichtung (7) umfassend einen Montageflansch (24), auf welchem die Pumpe (6) montiert ist und welcher mechanisch und auf eine fluiddichte Weise mit der inneren lateralen Oberfläche (12) des Rohrs (2) verbunden ist, um die Pumpe (6) in dem Rohr (2) zu unterstützen; wobei die Struktur **gekennzeichnet ist durch** Umfassen eines oberen Gehäuses (8), positioniert an einem oberen Ende (4) des Rohrs (2) und befestigt an dem Rohr (2) via einer Flanschverbindung (9), gebildet von einem Flanschpaar, befestigt an dem Rohr (2) und Gehäuse (8), um das obere Ende (4) des Rohrs (2) zu verschließen, und bereitgestellt mit einem Formstück (41), verbunden mit einem Auslassrohr (42), durch welches das von dem Brunnen gepumpte Wasser zu einem Verbraucher geliefert wird; und indem der Montageflansch (24) aufgehängt ist an einem Aufhängelement (34), zum Beispiel einer Kette oder einem Kabel oder ähnlichem Element, das an dem oberen Ende (4) der Röhre (2) an einer lösbaren Verriegelungsvorrichtung (35) befestigt ist, um das Stützen des Flansches (24) und der Pumpe (6) in Gebrauch sicherzustellen; die Stützvorrichtung (7), ferner umfassend ein Stützelement (11), im Wesentlichen ringförmig und befestigt an der inneren lateralen Oberfläche (12) des Rohrs (2), *welches* Stützelement (11) umfassend einen radial inneren Ring (13), welcher sich von der inneren lateralen Oberfläche (12) des Rohrs (2) erstreckt und an eine laterale Wand (5) des Rohrs (2) geschweißt ist und eine zentrale Durchgangsöffnung (14) und eine obere Fläche (15) aufweist, in Richtung des oberen Endes (4) des Rohrs (2) zeigend, im Wesentlichen flach; wobei der Montageflansch (24) auf dem Ring (13) ruht, eine axiale Verschlussdichtung (23), zwischen einer unteren Fläche (27) des Montageflansches (24) und der oberen Fläche (15) des Rings (13) positioniert ist.

2. Struktur gemäß Anspruch 1, wobei die Stützvorrichtung (7) an dem unteren Ende (3) des Rohrs (2) positioniert ist und das Rohr (2) unterteilt in eine untere Zone (21) für Wasseransaugen, in welcher ein Einlass (17) der Pumpe (6) platziert ist, und eine obere Zone (22), kommunizierend mit einem Auslass (18) der Pumpe (6), und die die Förderleitung (10) der Pumpe (6) darstellt.

3. Struktur gemäß Anspruch 2, wobei die Dichtung (23) die zwei Zonen (21, 22) auf eine fluiddichte Weise separiert.

4. Verfahren zur Herstellung eines Trinkwasserbrunnens, umfassend die Schritte:
- Bereitstellen eines Rohrs (2), definierend eine laterale Wand eines Brunnens;
- Montieren einer Tauchpumpe (6) auf einem Montageflansch (24); Aufhängen des Montageflansches (24) an einem Aufhängelement (34), zum Beispiel einer Kette oder einem Kabel oder einem ähnlichen Element;
- Herablassen innerhalb des Rohrs (2) der Tauchpumpe (6), montiert auf dem Montageflansch (24);
- mechanisches Verbinden der Pumpe (6) mit einer inneren lateralen Oberfläche (12) des Rohrs (2) durch eine Stützvorrichtung (7), die einen Montageflansch (24) umfasst und die die Pumpe (6) stützt und in einer fluiddichten Weise die Pumpe (6) mit der inneren lateralen Oberfläche (12) des Rohrs (2) auf so eine Weise mechanisch verbindet, dass das Rohr (2) sowohl eine strukturelle Funktion durchführt, da das Rohr (2) die laterale Wand des Brunnens definiert, als auch eine Funktion des Kanalisierens des von der Pumpe (6) angesaugten Wassers, da das Rohr (2) auch die Förderleitung (10) der Pumpe (6) definiert; wobei der Montageflansch (24) mechanisch und auf eine fluiddichte Weise mit der inneren lateralen Oberfläche (12) des Rohrs (2) verbunden ist, um die Pumpe (6) in dem Rohr (2) zu stützen;
das Verfahren ist **gekennzeichnet durch** Umfassen der Schritte:
- Befestigen eines oberen Gehäuses (8), bereitgestellt mit einem Formstück (41), verbunden mit einem Auslassrohr (42), durch welches das aus dem Brunnen gepumpte Wasser zu einem Verbraucher geliefert wird, mit einem oberen Ende (4) des Rohrs (2) via einer Flanschverbindung (9), gebildet von einem Paar von Flanschen, fixiert an dem Rohr (2) und Gehäuse (8), um das obere Ende (4) des Rohrs (2) zu verschließen;
- Bereitstellen für ein unteres Endes (3) des Rohrs (2) ein Stützelement (11), im Wesentlichen ringförmig und befestigt an der inneren lateralen Oberfläche (12) des Rohrs (2) und angeordnet, um den Montageflansch (24) aufzunehmen und zu stützen, der die Pumpe (6) trägt, das Stützelement (11) umfassend einen radial inneren Ring (13), der sich von der inneren lateralen Oberfläche (12) des Rohrs (2) erstreckt und an eine laterale Wand (5) des Rohrs (2) geschweißt ist und eine zentrale Durchgangsöffnung (14) und eine obere Fläche (15) aufweist, in Richtung des oberen Endes (4) des Rohrs (2) zeigend, im Wesentlichen flach;
- Lehnen des Montageflansches (24) auf den Ring (13); wobei eine axiale Verschlussdichtung (23) positioniert ist zwischen einer unteren Fläche (27) des Montageflansches (24)) und der oberen Fläche (15) des Rings (13);
- Befestigen des Aufhängeelements (34), an einem oberen Ende (4) des Rohrs (2), an einer lösbaren Verriegelungsvorrichtung (35), um das Stützen des Flansches (24) und der Pumpe (6) in Gebrauch sicherzustellen.

5. Verfahren gemäß Anspruch 4, wobei die Stützvorrichtung (7) positioniert ist an einem unterem Ende (3) des Rohrs (2), um das Rohr (2) in eine untere Zone (21) für Wasseransaugen einzuteilen, in welcher ein Einlass (17) der Pumpe (6) platziert ist und eine obere Zone (22), kommunizierend mit einem Auslass (18) der Pumpe (6), und die die Förderleitung (10) der Pumpe (6) darstellt.

6. Verfahren gemäß Anspruch 5, wobei die Dichtung (23) die zwei Zonen (21, 22) auf eine fluiddichte Weise separiert.

7. Verfahren gemäß Anspruch 5 oder 6, wobei das Rohr (2) ein Rohr ist, das bereits in einem existierenden Brunnen installiert ist und das Verfahren die Schritte des Entfernens aus dem Brunnen der in dem Brunnen vorhandenen Pumpe und der zugehörigen Förderleitung und das Einführen der Pumpe (6) und der Stützvorrichtung (7) in das Rohr (2) umfasst.

## Revendications

1. Structure de puits d'eau potable (1), comprenant un tube structurel (2) définissant une paroi latérale d'un puits ; et une pompe submersible (6) positionnée au niveau d'une extrémité inférieure (3) du tube (2) et raccordée à une conduite de refoulement (10) ; la structure comprenant un dispositif de support (7) qui supporte la pompe (6) et raccorde mécaniquement et de manière étanche aux fluides la pompe (6) à une surface latérale interne (12) du tube (2), de façon à ce que le tube (2) réalise à la fois une fonction structurelle, puisque le tube (2) définit la paroi latérale du puits, et une fonction de canalisation de l'eau aspirée par la pompe (6), puisque le tube (2) définit également la conduite de refoulement (10) de la pompe (6) ; le dispositif de support (7) comprenant une bride de montage (24) sur laquelle la pompe (6) est montée et qui est raccordée mécaniquement et de manière étanche aux fluides à la surface latérale interne (12) du tube (2), de façon à supporter la pompe (6) dans le tube (2) ; la structure étant **caractérisée en ce qu'**elle comprend un carter supérieur (8), positionné au niveau d'une extrémité supérieure (4) du tube (2) et fixé au tube (2) via un accouplement à bride (9), formé d'une paire de brides fixées au tube (2) et au carter (8), de façon à fermer l'extrémité supérieure (4) du tube (2) et pourvu d'un raccord (41) raccordé à un tubage de sortie (42) à travers lequel l'eau aspirée depuis le puits est délivrée à un utilisateur; et **en ce que** la bride de montage (24) est attachée à un élément de suspension (34), par exemple une chaîne ou un câble ou autre élément similaire, qui est fixé, au niveau de l'extrémité supérieure (4) du tube (2), à un dispositif de verrouillage libérable (35) de façon à assurer le support de la bride (24) et de la pompe (6) en utilisation ; le dispositif de support (7) comprenant en outre un élément de support (11), sensiblement en forme d'anneau et fixé à la surface latérale interne (12) du tube (2), lequel élément de support (11) comprenant un anneau radialement interne (13) qui s'étend depuis la surface latérale interne (12) du tube (2) et est soudé à une paroi latérale (5) du tube (2) et a une ouverture traversante centrale (14) et une face supérieure (15), orientée vers l'extrémité supérieure (4) du tube (2), sensiblement plate ; la bride de montage (24) reposant sur l'anneau (13) ;
un joint d'étanchéité axial (23) étant positionné entre une face inférieure (27) de la bride de montage (24) et la face supérieure (15) de l'anneau (13).

2. Structure selon la revendication 1, dans laquelle le dispositif de support (7) est positionné au niveau de l'extrémité inférieure (3) du tube (2) et divise le tube (2) en une zone inférieure (21) pour l'aspiration de l'eau, dans laquelle un orifice d'entrée (17) de la pompe (6) est situé, et une zone supérieure (22), communiquant avec un orifice de sortie (18) de la pompe (6) et qui constitue la conduite de refoulement (10) de la pompe (6).

3. Structure selon la revendication 2, dans laquelle ledit joint (23) sépare de manière étanche aux fluides les deux zones (21, 22).

4. Procédé de réalisation d'un puits d'eau potable, comprenant les étapes de :
- fourniture d'un tube (2) définissant une paroi latérale d'un puits ;
- montage d'une pompe submersible (6) sur une bride de montage (24) ; attache de la bride de montage (24) à un élément de suspension (34), par exemple une chaîne ou un câble ou autre élément similaire ;
- descente à l'intérieur du tube (2) de la pompe submersible (6) montée sur la bride de montage (24) ;
- raccordement mécanique de la pompe (6) à une surface latérale interne (12) du tube (2) au moyen d'un dispositif de support (7), qui comprend la bride de montage (24) et qui supporte la pompe (6) et raccorde mécaniquement et de manière étanche aux fluides la pompe (6) à la surface latérale interne (12) du tube (2), de façon à ce que le tube (2) réalise à la fois une fonction structurelle, puisque le tube (2) définit la paroi latérale du puits, et une fonction de canalisation de l'eau aspirée par la pompe (6), puisque le tube (2) définit également la conduite de refoulement (10) de la pompe (6) ; la bride de montage (24) étant raccordée mécaniquement et de manière étanche aux fluides à la surface latérale interne (12) du tube (2), de façon à supporter la pompe (6) dans le tube (2) ;
le procédé étant **caractérisé en ce qu'**il comprend les étapes de :
- fixation d'un carter supérieur (8), pourvu d'un raccord (41) raccordé à un tubage de sortie (42) à travers lequel l'eau aspirée depuis le puits est délivrée à un utilisateur, à une extrémité supérieure (4) du tube (2) via un accouplement à bride (9), formé d'une paire de brides fixées au tube (2) et au carter (8), de façon à fermer l'extrémité supérieure (4) du tube (2) ;
- fourniture à une extrémité inférieure (3) du tube (2) d'un élément de support (11), sensiblement en forme d'anneau et fixé à la surface latérale interne (12) du tube (2) et agencé pour recevoir et supporter la bride de montage (24) qui porte la pompe (6), l'élément de support (11) comprenant un anneau radialement interne (13) qui s'étend depuis la surface latérale interne (12) du tube (2) et est soudé à une paroi latérale (5) du tube (2) et a une ouverture traversante centrale (14) et une face supérieure (15), orientée vers l'extrémité supérieure (4) du tube (2), sensiblement plate ;
- appui de la bride de montage (24) sur l'anneau (13) ; un joint d'étanchéité axial (23) étant positionné entre une face inférieure (27) de la bride de montage (24) et la face supérieure (15) de l'anneau (13) ;
- fixation de l'élément de suspension (34), au niveau d'une extrémité supérieure (4) du tube (2), à un dispositif de verrouillage libérable (35) de façon à assurer un support de la bride (24) et de la pompe (6) en utilisation.

5. Procédé selon la revendication 4, dans lequel le dispositif de support (1) est positionné au niveau d'une extrémité inférieure (3) du tube (2) de façon à diviser le tube (2) en une zone inférieure (21) pour l'aspiration de l'eau, dans laquelle un orifice d'entrée (17) de la pompe (6) est situé, et une zone supérieure (22), communiquant avec un orifice de sortie (18) de la pompe (6) et qui constitue la conduite de refoulement (10) de la pompe (6).

6. Procédé selon la revendication 5, dans lequel le joint (23) sépare de manière étanche aux fluides les deux zones (21, 22).

7. Procédé selon la revendication 5 ou 6, dans lequel le tube (2) est un tube déjà installé dans un puits existant, et le procédé comprend les étapes d'enlèvement du puits de la pompe présente dans le puits et de la conduite de refoulement associée, et d'insertion dans le tube (2) de la pompe (6) et du dispositif de support (7).
